# EUROPÄISCHE PATENTSCHRIFT

(11) **EP 1 327 096 B1**
(45) Veröffentlichungstag und Bekanntmachung des Hinweises auf die Patenterteilung: **21.06.2006**
(21) Anmeldenummer: 01976197.2
(22) Anmeldetag: 06.09.2001
(51) Int. Cl.: F16L 37/38

(54) **STECKVERBINDUNG MIT AUSLAUFSPERRE**
PLUG-AND-SOCKET CONNECTION HAVING A DEVICE THAT PREVENTS DRAINAGE
RACCORD A EMBOITEMENT AVEC DISPOSITIF ANTI-DESEMBOITEMENT

(30) Priorität: 29.09.2000 DE 10048502
(43) Veröffentlichungstag der Anmeldung: 16.07.2003
(73) Patentinhaber: A. Raymond & Cie, 38019 Grenoble (FR)
(72) Erfinder: MARTIN-COCHER, Daniel, F-38950 Saint Martin le Vinoux (FR); MORETTI, Erminio, F-38000 Grenoble (FR); RAYMOND, Albert, F-38640 Claix (FR)
(74) Vertreter: Rüttgers, Joachim
(86) Internationale Anmeldenummer: PCT/EP2001/010271
(87) Internationale Veröffentlichungsnummer: WO 2002/027233

(56) Entgegenhaltungen:
- US-A- 5 273 254
- US-A- 5 485 982
- US-A- 5 988 705

## Beschreibung

Die Erfindung bezieht sich auf eine Steckverbindung nach dem Oberbegriff des Anspruchs 1.

Derartige Steckverbindungen werden beispielsweise In der Autoindustrie dazu verwendet, den Flüssigkeitsdurchfluss zu unterbrechen, wenn die Motoren am Produktionsort zum Probelauf an die Benzinleitungen angeschlossen und nach dem Probelauf wieder von der Benzinzufuhr abgetrennt werden, um sie an die Montagestraße zum bestimmungsgemäßen Einbau zu transportieren und dort endgültig an die Kraftstoffleitung anzuschließen. Dabei wird der von der Druckfeder in Schließstellung gehaltene Ventilkörper beim Einführen des Einsteckteils wieder in die Öffnungsstellung gedrückt, so dass der Kraftstoff wieder ungehindert durch die Steckverbindung fließen kann.

Für ein einwandfreies Funktionieren der Auslaufsperre kommt es darauf an, dass der Ventilkörper im Aufnahmegehäuse gut geführt und leicht einzubauen ist. Femer ist es wichtig, dass der konstruktive Aufbau der Auslaufsperre innerhalb des Durchflussraums möglichst einfach ist und daher auch kostengünstig hergestellt werden kann.

Bei der US-A-5,273,254 als gattungsgemäßer Druckschrift ist bei einer Steckverbindung ein längsverschleblich geführter und selbsttätig schließender Ventilkörper vorhanden, um bei einem Öffnen der Steckverbindung einen Austritt von Flüssigkeiten zu vermeiden. Bei dieser Druckschrift ist der Ventilkörper durch einen innen liegenden Stift und eine Führungsfläche geführt. Die in ihrer jeweiligen Grundform aufeinander angepassten Rippen und Ventilkörperausnehmungen dienen einer turbulenzfreien Strömungsführung. Zu diesem Zwecke dienen auch weitere Rippen. Bei der gattungsgemäßen Vorrichtung hat sich jedoch als nachteilig herausgestellt, dass die Zuverlässigkeit des Ventilkörpers beim automatischen Schließen nicht ganz zufriedenstellend ist.

Der Erfindung liegt die Aufgabe zugrunde, eine Steckverbindung der eingangs genannten Art anzugeben, die sich durch eine hohe Zuverlässigkeit beim Öffnen der Steckverbindung auszeichnet.

Diese Aufgabe wird bei einer Steckverbindung gemäß dem Oberbegriff des Patentanspruches 1 erfindungsgemäß mit den kennzeichnenden Merkmalen des Patentanspruches 1 gelöst.

Dadurch, dass bei der erfindungsgemäßen Steckverbindung auf der Rückseite der Abschlusswand angeordnete achsparallele Rippen vorhanden sind, die in entsprechend in der Innenwand des Aufnahmegehäuses ausgebildete Längsrillen gelagert und verschiebbar sind, ist eine äußerst zuverlässige Führung des Ventilkörpers sichergestellt.

Hierbei ist es besonders vorteilhaft, wenn die Außenwand der Hülse des Ventilkörpers zu einer umlaufenden Anlagerille erweitert ist, mit welcher der Ventilkörper im Schließzustand an dem in Einführrichtung hinteren dichtend angedrückt wird, während das vordere Teil der Hülse durch den Dichtungsring durchtritt, und wenn der die Hülse überragende Teil der radialen Rippe mit einer Kante abschließt, welche von der Stirnfläche des Einsteckteils beim Einführen in die Öffnung nach innen in die Öffnungsposition weggedrückt wird.

Zweckmäßigerweise ist die Innenwand dabei mit weiteren Längsrillen ausgestattet, so daß diejenigen Rillen, die nicht vom Ventilkörper mit Führungsrippen ausgefüllt werden, nach dem Wegdrücken des Ventilkörpers voll für den Flüssigkeitsdurchfluß verfügbar sind.

In der Zeichnung ist ein bevorzugtes Ausführungsbeispiel der Erfindung dargestellt und soll nachfolgend näher erläutert werden. Es zeigt
- Fig. 1: eine Steckverbindung vor dem Einführen des Einsteckteils in perspektivischer Darstellung,
- Fig. 2: einen vergrößerten Teilschnitt durch die Gehäusewand mit Einblick auf den geschlossenen Ventilkörper,
- Fig. 3: die gleiche Steckverbindung wie Figur 1 nach dem vollständigen Einführen des Einsteckteils,
- Fig. 4: den gleichen, vergrößerten Teilschnitt durch die Gehäusewand mit Einblick auf den geöffneten Ventilkörper,
- Fig. 5: einen Längsschnitt durch das noch geschlossene Kupplungsgehäuse mit teilweise eingeführtem Einsteckteil,
- Fig. 6: den gleichen Längsschnitt durch das Kupplungsgehäuse mit voll eingeführtem Einsteckteil und Ventilkörper in Öffnungsstellung,
- Fig. 7: ein Querschnitt durch das Kupplungsgehäuse mit dem Ventilkörper gemäß Linie VII - VII in Figur 6 und
- Fig. 8: einen Querschnitt durch das Kupplungsgehäuse mit dem Ventilkörper gemäß Linie VIII-VIII in Figur 6.

Die in den Figuren dargestellte Steckverbindung dient zur lösbaren Verbindung von Flüssigkeit führenden Leitungsrohren, insbesondere von Kraftstoffleitungen im Kraftfahrzeugbau.

Die Steckverbindung besteht hierbei aus einem zylindrischen Aufnahmegehäuse **1** mit einem Stutzen **2** zum Anschluß des einen Leitungsrohres **3** und einer Öffnung **4** am anderen Ende zum Einführen eines rohrförmigen Einsteckteils **5.** Dieses ist an seinem anderen Ende ebenfalls mit einem Stutzen **6** zum Anschluß des anderen Leitungsrohres **7** versehen und besitzt im Abstand vom vorderen Einführende eine umlaufende Rippe **8.**

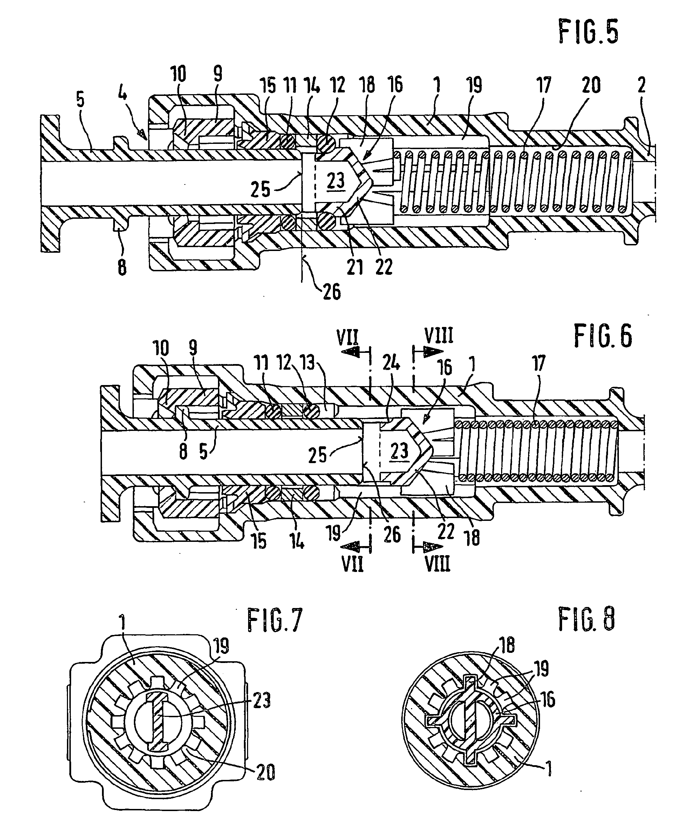

Im Einführbereich des Aufnahmegehäuses **1** ist, wie aus **Figuren 5 und 6** ersichtlich, ein quer zur Einführrichtung auffederbares Verriegelungselement **9** mit nach innen gerichteten Klemmbacken **10** eingebaut. Diese werden beim Einführen des Einsteckteils **5** von dessen Halterippe **8** auseinandergedrückt und federn wieder zusammen, sobald die Rippe **8** die Klemmbacken **10** passiert hat, so daß das Einsteckteil **5** im Kupplungsgehäuse **1** eingerastet ist (vgl. **Figur 6).**

In Einführrichtung hinter dem Verriegelungselement **9** sind zwei Dichtungsringe **11** und **12** vorhanden, welche den Ringspalt **13** zwischen dem Aufnahmegehäuse **1** und dem eingeführten Einsteckteil **5** abdichten. Die Dichtungsringe **11** und **12** sind durch einen Zwischenring **14** auf Abstand gehalten und durch einen Distanzring **15** hinter dem Verriegelungselement **9** im Aufnahmegehäuse **1** in axialer Richtung festgelegt.

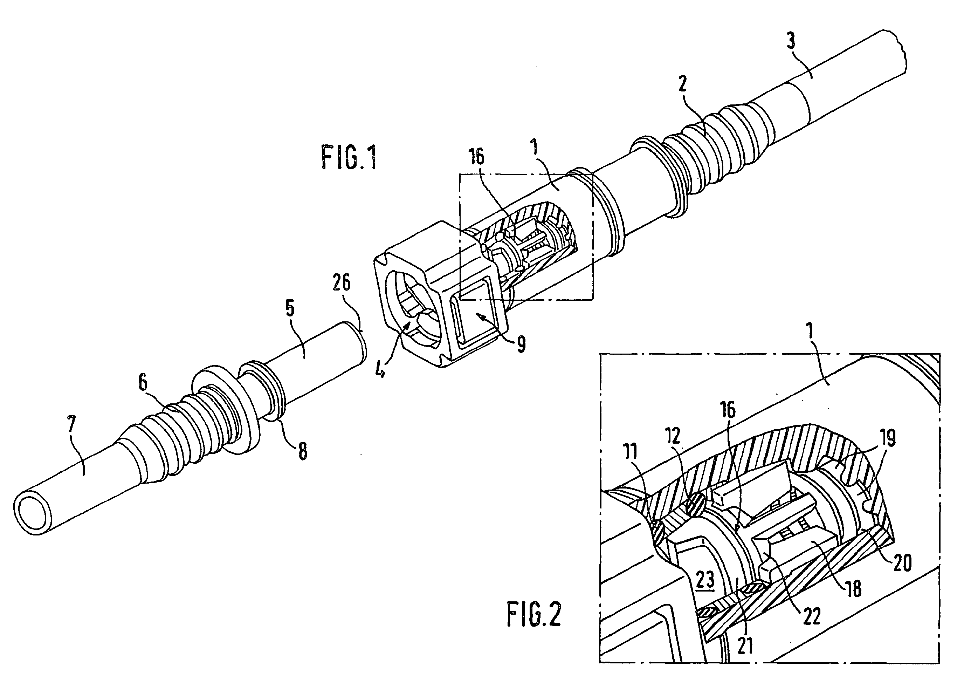

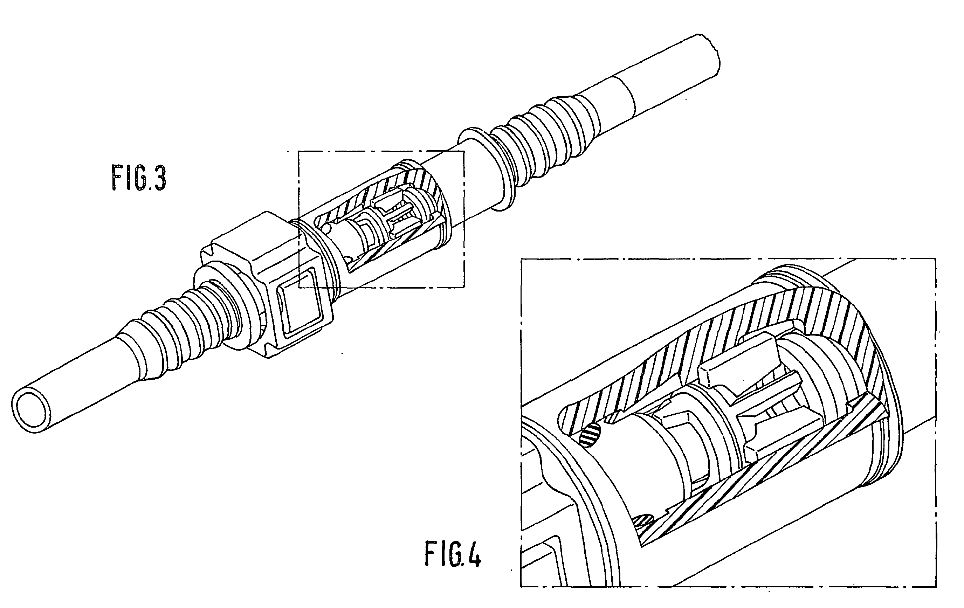

Im mittleren Durchflußraum des Aufnahmegehäuses **1** ist ein längsverschieblich geführter Ventilkörper **16** vorgesehen, welcher mit einer Spiralfeder **17** am Ende des Aufnahmegehäuses **1** abgestützt ist. Dieser Ventilkörper **16** schließt den Durchflußraum im entkuppelten Zustand selbsttätig ( **Figuren 1 und 2 )** und wird beim Einführen des Einsteckteils **5** gegen den Druck der Spiralfeder **17** in die Öffnungsstellung gedrückt ( **Figuren 3 und** 4 ).

Der Ventilkörper **16** ist im wesentlichen als eine Hülse **21** ausgebildet, welche an ihrem von der Einführöffnung **4** abgewandten Ende durch eine etwa kegelförmige Abschlußwand **22** geschlossen und von einer radialen Rippe **23** durchdrungen ist.

Der Ventilkörper **16** weist auf der Rückseite der Abschlußwand **22** vier über den Umfang gleichmäßig verteilte, achsparallele Rippen **18** auf, welche in entsprechenden Längsrillen **19** in der Innenwand **20** des Aufnahmegehäuses **1** verschiebbar geführt sind ( **Figur 8** ).

Zwischen den die Rippen **18** führenden Längsrillen **19** sind noch weitere Längsrillen **19** im gleichmäßigen Abstand in der Innenwand **20** eingeformt. Diese dienen ausschließlich dem ungehinderten Durchfluß des Kraftstoffs, wenn der Ventilkörper **16** sich in seiner Öffnungsstellung befindet ( **Figur 6** ).

Der Ventilkörper **16** ist in seinem hülsenförmig ausgebildeten Teil **21** an der Außenwand zu einer umlaufenden Anlagerille **24** erweitert, mit welcher der Ventilkörper **16** im Schließzustand an dem in Einführrichtung hinteren Dichtungsring **12** dichtend angedrückt wird, während das vordere Teil der Hülse **21** durch den Dichtungsring **12** durchtritt.

Die radiale Rippe **23** überragt die Hülse **21** um etwa die Breite des Zwischenrings **14** und schließt mit einer Kante **25** ab, welche von der Stirnfläche **26** des Einsteckteils **5** beim Einführen in die Einführöffnung nach innen in die Öffnungsposition weggedrückt wird.

### Bezugszeichenliste

- 1: Aufnahmegehäuse
- 2: Anschlußstutzen
- 3: Leitungsrohr
- 4: Einführöffnung
- 5: Einsteckteil
- 6: Anschlußstutzen
- 7: Leitungsrohr
- 8: umlaufende Rippe
- 9: Verriegelungselement
- 10: Klemmbacken
- 11:: Dichtungsring
- 12: Dichtungsring
- 13: Ringspalt
- 14: Zwischenring
- 15: Distanzring
- 16: Ventilkörper
- 17: Spiralfeder
- 18: Rippen
- 19: Längsrillen
- 20: Innenwand
- 21: Hülse
- 22: Abschlußwand
- 23: radiale Rippe
- 24: Anlagerille
- 25: Kante
- 26: Stirnfläche

## Patentansprüche

1. Steckverbindung für Flüssigkeit führende Leitungsrohre mit einem zylindrischen Aufnahmegehäuse (1) mit einem Stutzen (2) an einem Ende zum Anschluss eines Leitungsrohres (3) und einer Öffnung (4) am anderen Ende zum Einführen eines rohrförmigen Einsteckteils (5), welches seinerseits an seinem anderen Ende mit einem Stutzen (6) zum Anschluss eines weiteren Leitungsrohres (7) versehen ist, wobei im Einführbereich des Aufnahmegehäuses (1) ein quer zur Einführrichtung zu öffnendes Verriegelungselement (9) mit nach innen gerichteten Klemmbacken (10) eingebaut ist und wobei im Abstand vom vorderen Einführende des Einsteckteils (5) eine umlaufende Rippe (8) auf dem Einsteckteil (5) angeformt ist, welche beim Einführen des Einsteckteils (5) nach dem Passieren der Klemmbacken (10) hinter diesen einrastet, wobei femer mindestens ein Dichtungsring (11,12) zum Abdichten des Ringspaltes (13) zwischen dem Aufnahmegehäuse (1) und dem eingeführten Einsteckteil (5) vorhanden ist, wobei ein im mittleren Durchflussraum des Aufnahmegehäuses (1) längsverschieblich geführter und diesen im entkuppelten Zustand selbsttätig schließender Ventilkörper (16) vorgesehen ist, welcher beim Einführen des Einsteckteils (5) gegen den Druck einer Spiralfeder (17) in die Öffnungsstellung gedrückt wird, und wobei der Ventilkörper (16) als Hülse (21) ausgebildet ist, welche an ihrem von der Einführöffnung (4) abgewandten Ende durch eine extra kegelförmige Abschlusswand (22) geschlossen und von einer Rippe (23) durchdrungen ist und mit mindestens drei über den Umfang gleichmäßig verteilten, achsparallelen Rippen (18) versehen ist, **dadurch gekennzeichnet, dass** die achsparallelen Rippen (18) auf der Rückseite der Abschlusswand (22) angeordnet und in entsprechenden Längsrillen (19) in der Innenwand (20) des Aufnahmegehäuses (1) verschiebbar sind.

2. Steckverbindung nach Anspruch 1, **dadurch gekennzeichnet, dass** die Außenwand der Hülse (21) des Ventilkörpers (16) zu einer umlaufenden Anlagerille (24) erweitert ist, mit welcher der Ventilkörper (16) im Schließzustand an dem in Einführrichtung hinteren Dichtungsring (12) dichtend angedrückt wird, während das vordere Teil der Hülse (21) durch den Dichtungsring (12) durchtritt.

3. Steckverbindung nach Anspruch 2, **dadurch** aekennzeichnet, dass der die Hülse (21) überragende Teil der durchdringenden, radialen Rippe (23) mit einer Kante (25) abschließt, welche von der Stirnfläche (26) des Einsteckteils (5) beim Einführen in die Öffnung (4) nach innen in die Öffnungsposition weggedrückt wird.

4. Steckverbindung nach Anspruch 3, **dadurch gekennzeichnet, dass** die Innenwand (20) des Aufnahmegehäuses (1) mit weiteren Längsrillen (19) versehen ist, von denen die nicht mit einer achsparallelen Fuhrungsrippe (18) ausgefüllten Längsrillen (19) nach dem Wegdrücken des Ventilkörpers (16) dem Flüssigkeitsdurchfluss dienen.

## Claims

1. Plug connection for conduits used in conveying a fluid, comprising a cylindrical receptacle housing (1), having a connecting piece (2) at one end of said housing for connecting a conduit (3), and with an opening (4) at the other end for inserting a tubular plug-in part (5), wherein said tubular plug-in part is provided at its other end with a connecting piece (6) for connecting a further conduit (7), wherein in the inserting region of the receptacle housing (1), a locking element (9) to be opened transversely to the inserting direction and having inwardly directed clamping jaws (10) is incorporated and whereby a peripheral rib (8) is formed onto the plug-in part (5) at a distance from the front inserting end of the plug-in part (5), wherein on insertion of the plug-in part (5), after passing the clamping jaws (10), said rib engages behind said clamping jaws, wherein furthermore at least one sealing ring (11, 12) is present for sealing the annular gap (13) between the receptacle housing (1) and the inserted plug-in part (5), wherein, in the central flow-through chamber of the receptacle housing (1), a valve body (16) which is self-closing in the uncoupled condition and which is guided to be longitudinally displaceable is provided, wherein said valve body is pressed, against the force of a spiral spring (17) on insertion of the plug-in part (5), into the open position, and wherein the valve body (16) is designed as a sleeve (21) which is closed at its end facing away from the inserting opening (4) by an approximately conical end wall (22) and is penetrated by a rib (23) and is provided with at least three ribs (18) parallel to the axis and evenly distributed over the periphery, **characterised in that** the ribs (18) parallel to the axis are arranged on the rear side of the end wall (22) and are displaceable in corresponding longitudinal grooves (19) in the inner wall (20) of the receptacle housing (1).

2. Plug connection according to claim 1, **characterised in that** the outer wall of the sleeve (21) of the valve body (16) is widened to form a circumferential contact groove (24) with which, in the closed position, the valve body (16) is pressed in sealing manner against the ring seal (12) which is rearmost in the inserting direction (12) and the forward portion of the sleeve (21) penetrates through the ring seal (12).

3. Plug connection according to claim 2, **characterised in that** the portion of the penetrating radial rib (23) extending beyond the sleeve (21) ends with an edge (25) which is pressed away from the end face (26) of the plug-in part (5) on inserting it inwardly into the opening (4) and into the open position.

4. Plug connection according to claim 3, **characterised in that** the inner wall (20) of the receptacle housing (1) is provided with further longitudinal grooves (19) of which the longitudinal grooves (19) not filled with a guide rib (18) parallel to the axis serve, after pressing away of the valve body (16), to provide a fluid passage.

## Revendications

1. Système d'accouplement rapide amovible destiné à des canalisations véhiculant des liquides, se composant d'un logement de réception cylindrique (1) comportant, à une de ses extrémités, une tubulure (2) pour le raccordement d'une canalisation (3) et au niveau de son autre extrémité une ouverture (4) pour l'emmanchement d'un élément tubulaire mâle (5) qui est lui-même uni, à son autre extrémité, d'une tubulure (6) pour le raccordement d'une autre canalisation (7), un élément de verrouillage (9), comportant des mâchoires de serrage (10) orientées vers l'intérieur, s'ouvrant transversalement par rapport au sens de l'introduction étant en l'occurrence monté dans la zone d'introduction du logement de réception (1) et une nervure périphérique (8) étant en l'occurrence réalisée solidaire par moulage de l'élément tubulaire mâle (5), à une certaine distance de l'extrémité d'introduction antérieure de l'élément tubulaire mâle (5), nervure qui, lors de l'emmanchement de l'élément mâle (5) vient, après le passage des mâchoires de serrage (10), s'encastrer derrière celles-ci, au moins une bague d'étanchéité (11, 12) étant en outre en l'occurrence prévue pour assurer l'étanchéité de l'intervalle annulaire (13) entre le logement de réception (1) et l'élément mâle (5) emmanché en position et un élément formant clapet (16) étant de plus encore prévu au centre du gabarit d'écoulement du logement de réception (1), monté avec la possibilité de se déplacer dans le sens longitudinal et se fermant automatiquement lorsque le système est à l'état désaccouplé, qui, lors de l'emmanchement de l'élément mâle (5) est poussé en position d'ouverture en contrant la pression antagoniste exercée par un ressort hélicoïdal (17) et l'élément formant clapet (16) se présentant en l'occurrence sous la forme d'un manchon (21) qui est, au niveau de son extrémité orientée à l'opposé de l'ouverture d'introduction (4), fermé par une paroi d'obturation (22) de configuration sensiblement conique et traversé par une nervure (22) et qui est muni d'au moins trois nervures (18) parallèles à son axe, disposées de manière équidistante sur sa périphérie, **caractérisé en ce que** les nervures parallèles à l'axe (18) sont disposées sur la face arrière de la paroi d'obturation (22) et sont susceptibles de coulisser dans des rainures longitudinales (19) ménagées en correspondance dans la paroi intérieure (20) du logement de réception.

2. Système d'accouplement rapide amovible selon la revendication 1, **caractérisé en ce que** la paroi extérieure du manchon (21) de l'élément formant clapet (16) est agrandie pour former une rainure de butée périphérique (24), au moyen de laquelle l'élément formant clapet (16) est à l'état fermé appliqué sous pression, en réalisant en l'occurrence une action d'étanchéité, contre la bague d'étanchéité (12) se trouvant à l'arrière dans le sens de l'introduction, tandis que la partie antérieure du manchon (21) traverse la bague d'étanchéité (12).

3. Système d'accouplement rapide amovible selon la revendication 2, **caractérisé en ce que** la portion de la nervure radiale traversante (23) formant saillie au-dessus du manchon (21) se termine par un rebord (25) qui est repoussé vers l'intérieur dans la position d'ouverture par la face antérieure (26) de l'élément mâle (5), lors de l'introduction de celui-ci dans l'ouverture (4).

4. Système d'accouplement rapide amovible selon la revendication 3, **caractérisé en ce que** la paroi intérieure (20) du logement de réception (1) est munie d'autres rainures longitudinales (19), celles d'entre ces rainures longitudinales (19) qui ne sont pas obturées par une nervure de guidage parallèle à l'axe (18) servant à assurer l'écoulement du liquide après que l'élément formant clapet (16) a été repoussé.
